# EUROPÄISCHE PATENTSCHRIFT

(11) **EP 3 067 330 B1**
(45) Veröffentlichungstag und Bekanntmachung des Hinweises auf die Patenterteilung: **24.07.2019**
(21) Anmeldenummer: 15158651.8
(22) Anmeldetag: 11.03.2015
(51) Int. Cl.: C02F 3/30, C02F 101/38, C02F 3/34, C02F 3/26

(54) **WASSERAUFBEREITUNGSANLAGE UND VERFAHREN ZUR AUFBEREITUNG VON HARNSTOFFHALTIGEN ABWÄSSERN**
WATER TREATMENT PLANT AND PROCESS FOR THE TREATMENT OF UREA CONTAINING WATER
INSTALLATION DE PRÉPARATION D'EAU ET PROCÉDÉ POUR LE TRAITEMENT DE L'EAU CONTENANT DE L'URÉE

(43) Veröffentlichungstag der Anmeldung: 14.09.2016
(73) Patentinhaber: Grundfos Holding A/S, 8850 Bjerringbro (DK)
(72) Erfinder: Poudel, Bhupendra, 9500 Hobro (DK); Bak, Søren Nøhr, 8600 Silkeborg (DK)
(74) Vertreter: Patentanwälte Vollmann Hemmer Lindfeld Partnerschaft mbB

(56) Entgegenhaltungen:
- EP-A1- 0 498 337
- WO-A1-2010/030181
- WO-A1-2012/163085
- JP-A- H 091 171
- JP-A- 2012 148 231
- US-A- 5 268 094
- US-A1- 2006 283 794
- US-A1- 2013 256 217
- US-A1- 2014 091 035
- US-B1- 7 416 669
- K. Rittstieg ET AL: "Aerobic treatment of a concentrated urea wastewater with simultaneous stripping of ammonia", Applied Microbiology and Biotechnology, vol. 56, no. 5-6, 1 September 2001 (2001-09-01), pages 820-825, XP055497518, DE ISSN: 0175-7598, DOI: 10.1007/s002530100696

## Beschreibung

Die Erfindung betrifft eine Wasseraufbereitungsanlage zur Aufbereitung von harnstoffhaltigen, insbesondere stark harnstoffhaltigen Abwässern sowie ein Abwasseraufbereitungsverfahren zur Aufbereitung derartiger Abwässer.

Es ist bekannt, harnstoffhaltige Abwässer in drei Schritten aufzubereiten, wobei in einem ersten Schritt Harnstoff im Wege der Ammonifikation zu Ammoniak und Kohlenstoffdioxid umgesetzt wird. Aus dem Ammoniak entstehen im Wasser Ammoniumionen, welche in einem zweiten Schritt durch Zufuhr von Sauerstoff zu Nitrit und weiter zu Nitrat oxidiert werden können. In einem dritten Schritt wird im Wege der Denitrifikation das Nitrat unter Sauerstoffabschluss und durch geeignete Bakterien oder bakterielle Enzyme in Stickstoff umgesetzt. Ein solches Verfahren kombiniert aerobe und anaerobe Verfahrensschritte, welche getrennt voneinander durchzuführen sind. Dabei ist es schwierig, die einzelnen Verfahrensschritte derart optimal zu regeln, dass alle Stoffe in der gewünschten Weise umgesetzt werden, um am Ende ausreichend aufbereitetes Abwasser zu erhalten, welches keine unerwünschten Stoffe enthält. Die WO 2010/030181 A1 und die US 5,268,049 beschreiben einen Bioreaktor bzw. einen Tank, in dem sämtliche Verfahrensschritte durchgeführt werden. WO2012/163085 und Rittstieg et al., "Aerobic treatment of a concentrated urea wastewater with simultaneous stripping of ammonia" beschreiben Verfahren zur Aufbereitung von harnstoffhaltigen Abwässern, in denen die Hydrolyse in einem ersten Behälter stattfindet und die Nitrifikation in einem zweiten belüfteten Behälter stattfindet.

Im Hinblick auf diese Problematik ist es Aufgabe der Erfindung eine Abwasseraufbereitungsanlage dahingehend zu verbessern, dass sie insgesamt besser regelbar ist, so dass bei möglichst geringem Energieverbrauch eine optimale Aufbereitung des Abwassers erreicht werden kann.

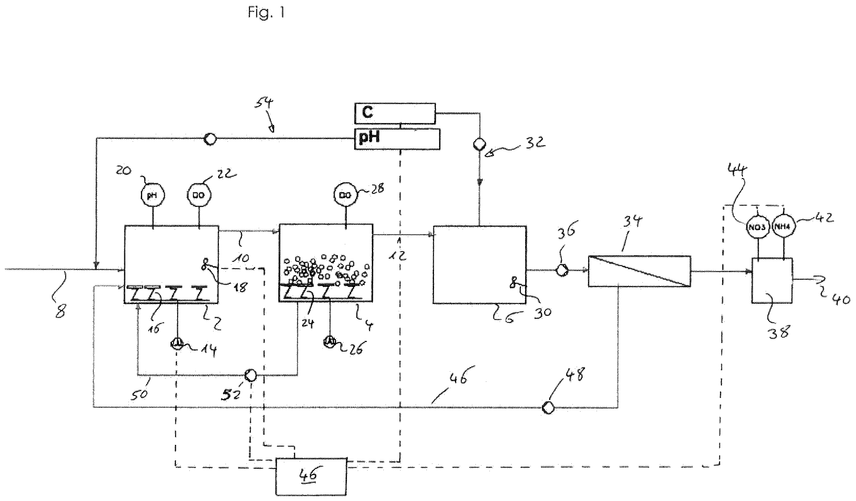

Diese Aufgabe wird durch eine Abwasseraufbereitungsanlage mit den in Anspruch 1 angegebenen Merkmalen sowie durch ein Abwasseraufbereitungsverfahren mit den in Anspruch 9 angegebenen Merkmalen gelöst. Bevorzugte Ausführungsformen ergeben sich aus den zugehörigen Unteransprüchen, der nachfolgenden Beschreibung sowie der beigefügten Figur.

Die erfindungsgemäße Abwasseraufbereitungsanlage dient zur Aufbereitung von harnstoffhaltigen, insbesondere stark harnstoffhaltigen Abwässern. Die Abwasseraufbereitungsanlage weist dazu zumindest einen ersten Aufbereitungsbehälter auf, welcher eine Abwasserzufuhr aufweist. Die Anlage ist dafür ausgestaltet, dass durch die Abwasserzufuhr im Betrieb der Abwasseraufbereitungsanlage harnstoffhaltige Abwässer in den ersten Aufbereitungsbehälter eingeleitet werden. Die Abwasseraufbereitungsanlage ist dafür vorgesehen, dass im Betrieb in dem ersten Aufbereitungsbehälter Harnstoff in Ammoniak umgewandelt wird. Dies geschieht vorzugsweise durch Urease bzw. Urease Enzyme, welche vorzugsweise durch Bakterien gebildet werden. Dabei handelt es sich vorzugsweise um urolytische Bakterien bzw. Urease-positive Bakterien. Neben Harnstoff können in dem ersten Schritt auch Aminosäuren umgesetzt werden, wobei die Aminosäuren in Anwesenheit von Kohlenstoffdioxid zunächst in Harnstoff umgewandelt werden und anschließend durch urease Enzyme in entsprechender Weise in Ammoniak umgewandelt werden. Aus in wassergelösten Ammoniak entstehen dann vorzugsweise Ammoniumionen.

Erfindungsgemäß ist der zumindest eine erste Aufbereitungsbehälter derart ausgebildet, dass er eine Sauerstoffzufuhreinrichtung aufweist, über welche dem Inhalt des Aufbereitungsbehälters Sauerstoff zugeführt werden kann. Dazu kann die Sauerstoffzufuhreinrichtung direkt an oder in dem Aufbereitungsbehälter angeordnet sein. Alternativ kann die Sauerstoffzufuhreinrichtung auch an oder in der Abwasserzufuhr angeordnet oder in anderer Weise mit dem Aufbereitungsbehälter verbunden sein. Wesentlich ist lediglich, dass dem Abwasser, welches in den Aufbereitungsbehälter eingeleitet wird oder sich in dem Aufbereitungsbehälter befindet, Sauerstoff zugeführt werden kann. Bei der Sauerstoffzufuhreinrichtung kann es sich um eine Einrichtung handeln, welche reinen Sauerstoff oder aber Luft in das Innere des Aufbereitungsbehälters einleitet. So kann es sich insbesondere um eine Belüftungseinrichtung handeln. Die Sauerstoffzufuhreinrichtung bzw. Belüftungseinrichtung kann mit einem außerhalb des Aufbereitungsbehälters angeordneten Kompressor oder Gebläse versehen sein, um Sauerstoff und/oder Luft unter Druck in das Wasser in dem Aufbereitungsbehälter einleiten zu können. Vorzugsweise sind in dem Aufbereitungsbehälter geeignete Düsen oder Öffnungen vorgesehen, welche eine Einleitung des Gases in den Behälter und vorzugsweise eine Verteilung zumindest in einem Abschnitt des Behälters ermöglichen.

Die Abwasseraufbereitungsanlage weist darüber hinaus eine Steuereinrichtung auf, über welche die Sauerstoffzufuhreinrichtung bzw. Belüftungseinrichtung ein- und ausschaltbar ist. So kann die Sauerstoff- bzw. Luftzufuhr in das Abwasser gesteuert werden. Die Steuereinrichtung kann die Sauerstoffzufuhreinrichtung bzw. Belüftungseinrichtung aktivieren, so dass Luft bzw. Sauerstoff dem Abwasser zugeführt wird oder diese abschalten, so dass keine Luft bzw. Sauerstoff in das Abwasser eingeleitet wird. Dadurch kann erreicht werden, dass die Umwandlung von Harnstoff in Ammoniak bzw. Ammonium wahlweise aerob oder anaerob durchführbar ist. D. h. in ein und derselben Anlage kann über die Steuereinrichtung der Prozess so variiert werden, dass die Umwandlung von Harnstoff in Ammoniak in aerober Weise, d. h. unter Sauerstoffzufuhr oder anaerob ohne Sauerstoffzufuhr durchgeführt wird. Dies hat den Vorteil, dass es möglich wird, je nach dem, in welchem Zustand der erste Aufbereitungsbehälter betrieben wird, gleichzeitig einen weiteren Wasseraufbereitungsschritt in demselben Aufbereitungsbehälter durchführen zu können, wobei dies damit wahlweise ein Aufbereitungsschritt sein kann, welcher unter Sauerstoffzufuhr oder unter Sauerstoffabschluss erfolgt. Dies ermöglicht einen flexiblen Einsatz bzw. eine flexible Steuerung der Abwasseraufbereitungsanlage, da der erste Aufbereitungsbehälter von dem einen Betriebszustand in den anderen Betriebszustand über die Steuereinrichtung umgeschaltet werden kann.

Erfindungsgemäß ist in der Abwasseraufbereitungsanlage zumindest ein mit der Steuereinrichtung verbundener erster Sensor vorhanden, welcher zum Erfassen einer Ammonium- oder Ammoniakkonzentration ausgebildet ist. Die Steuereinrichtung ist dabei derart ausgebildet, dass sie die Sauerstoffzufuhreinrichtung in dem ersten Aufbereitungsbehälter in Abhängigkeit einer von dem ersten Sensor erfassten Konzentration ein- und ausschaltet. So kann der Prozess in dem ersten Aufbereitungsbehälter abhängig von der erfassten Stoffkonzentration entweder aerob oder anaerob betrieben werden, so dass stets die Verfahrensvariante gewählt werden kann, bei welcher eine optimale Abwasseraufbereitung bei gleichzeitig möglichst geringem Energieeinsatz erfolgt. Insbesondere sind zu hohe Ammonium- oder Ammoniakkonzentrationen im aufbereiteten Abwasser unerwünscht, so dass in Abhängigkeit des Restammoniums im Abwasser die Anlage so gesteuert bzw. geregelt werden kann, dass eine optimale Abwasseraufbereitung erreicht wird, um die Ammonium- bzw. Ammoniakkonzentration möglichst gering zu halten. Dazu kann wahlweise in dem ersten Aufbereitungsbehälter ein aerober oder anaerober Betrieb eingesetzt werden.

Zudem ist die Steuereinrichtung erfindungsgemäß derart ausgebildet, dass sie die Sauerstoffzufuhr oder Belüftung in dem ersten Aufbereitungsbehälter einschaltet, wenn eine von dem Sensor erfasste Konzentration einen vorgegebenen Grenzwert überschreitet, insbesondere eine von dem Sensor erfasste Ammonium- bzw. Ammoniakkonzentration einen vorgegebenen Grenzwert überschreitet. Wenn die Ammonium- oder Ammoniak-Konzentration in dem aufbereiteten Abwasser unter dem vorgegebenen Grenzwert liegt, wird dem ersten Aufbereitungsbehälter dagegen kein Sauerstoff zugeführt. Eine Überschreitung des Grenzwerts ist ein Anzeichen dafür, dass der Abbau des Ammoniums in dem Abwasser nicht schnell genug erfolgt. Das Ammonium wird in der Abwasseraufbereitungsanlage vorzugsweise in bekannter Weise, wie oben beschrieben, durch Nitrifikation bzw. Nitrifizierung in Nitrat und/oder Nitrit umgesetzt. Auch dies erfolgt vorzugsweise mit Hilfe geeigneter Bakterien. Ein solcher Verfahrensschritt erfolgt aerob, d. h. unter Luft- bzw. Sauerstoffzufuhr. Wenn ein solcher Prozess nicht ausreichend schnell erfolgt, ist es vorteilhaft, den Aufbereitungsprozess in dem ersten Aufbereitungsbehälter aerob durchzuführen, so dass neben der Umwandlung von Harnstoff in Ammoniak in dem ersten Aufbereitungsbehälter gleichzeitig eine Umsetzung von Ammonium in Nitrat mit Hilfe von Nitrifizierungsbakterien erfolgen kann. So können zwei Verfahrensschritte in dem ersten Aufbereitungsbehälter gleichzeitig ablaufen. Wenn die Ammoniakkonzentration bzw. Ammoniumkonzentration in dem aufbereiteten Abwasser jedoch gering ist, ist eine derart aufwendige Belüftung in dem ersten Aufbereitungsbehälter nicht erforderlich, so dass diese von der Steuereinrichtung abgeschaltet werden kann, so dass der Energieverbrauch reduziert werden kann. Dann kann die Nitrifizierung bevorzugt in einem nachgeschalteten weiteren Behälter erfolgen, wie es nachfolgend beschrieben wird.

Der erste Sensor ist vorzugsweise an einer Ausgangsseite der Abwasseraufbereitungsanlage angeordnet und erfasst die Ammoniumkonzentration in dem aufbereiteten Abwasser, d. h. in dem Abwasser, welches die Abwasseraufbereitungsanlage verlässt bzw. verlassen soll.

Gemäß einer weiteren bevorzugten Ausführungsform ist in dem ersten Aufbereitungsbehälter zumindest eine Umwälzeinrichtung angeordnet, welche von der Steuereinrichtung ein- und ausschaltbar ist. Eine solche Umwälzeinrichtung kann beispielsweise eine Pumpe oder ein Rührwerk sein. Die Steuereinrichtung ist weiter bevorzugt derart ausgebildet, dass die Umwälzeinrichtung eingeschaltet ist, wenn die Sauerstoffzufuhreinrichtung in dem ersten Aufbereitungsbehälter ausgeschaltet ist und umgekehrt. Wenn die Sauerstoffzufuhreinrichtung oder Belüftungseinrichtung eingeschaltet ist, ist die Umwälzeinrichtung ausgeschaltet, da dann durch das einströmende Gas eine ausreichende Umwälzung erreicht wird. Wird kein Gas zugeführt, ist jedoch eine Umwälzung durch die Umwälzeinrichtung zweckmäßig.

Erfindungsgemäß ist dem ersten Aufbereitungsbehälter nachgeschaltet zumindest ein zweiter Aufbereitungsbehälter angeordnet. Das bedeutet, das aus dem ersten Aufbereitungsbehälter austretende Abwasser wird in den zweiten nachfolgenden Aufbereitungsbehälter eingeleitet. Dazu sind beide über zumindest eine geeignete Überströmleitung verbunden, ggf. kann auch eine Pumpe vorgesehen sein, um das Abwasser aus dem ersten Aufbereitungsbehälter in den zweiten Aufbereitungsbehälter zu fördern. Der zweite Aufbereitungsbehälter weist eine Sauerstoffzufuhreinrichtung, insbesondere in Form einer Belüftungseinrichtung auf, wobei im Betrieb der Abwasseraufbereitungsanlage in dem zweiten Aufbereitungsbehälter unter Luftzufuhr Ammoniak und/oder Ammonium in dem Abwasser in Nitrat umgewandelt wird. D. h. hier erfolgt der Nitrifizierungsprozess, wie er vorangehend beschrieben wurde. Ein solcher Prozess muss stets aerob erfolgen, weshalb die Sauerstoffzufuhr oder Luftzufuhr über eine Sauerstoffzufuhr- oder Belüftungseinrichtung erforderlich ist. Diese ist daher vorzugsweise zum konstanten Betrieb ausgebildet. Wenn ein solcher zweiter Aufbereitungsbehälter vorgesehen ist, kann dessen Wirkung jedoch durch den ersten Aufbereitungsbehälter, wenn dieser im aeroben Zustand betrieben wird, unterstützt werden, da dann zusätzlich eine Nitrifizierung bereits in dem ersten Aufbereitungsbehälter erfolgen kann. Dies ermöglicht es, den zweiten Aufbereitungsbehälter entsprechend kleiner auszulegen, da der dort ablaufende Prozess ggf. durch Betrieb des ersten Aufbereitungsbehälters im aeroben Zustand unterstützt werden kann, vorzugsweise abhängig davon, wie hoch die Ammoniumkonzentration im aufbereiteten Abwasser ist.

Bei der Umwandlung des Ammoniums zu Nitrat erfolgt bevorzugt zunächst eine Oxidation des Ammoniums zu Nitrit mit Hilfe geeigneter Bakterien. In einem weiteren Schritt, welcher parallel im selben Aufbereitungsbehälter stattfinden kann, wird das Nitrit dann vorzugsweise zu Nitrat oxidiert, auch dies erfolgt mit Hilfe geeigneter Mikroorganismen.

Weiter bevorzugt ist der zweite Aufbereitungsbehälter mit dem ersten Aufbereitungsbehälter über eine Zirkulationsleitung verbunden, in welcher eine von der Steuereinrichtung angesteuerte Pumpe und/oder ein von der Steuereinrichtung angesteuertes Ventil angeordnet ist. Durch Ansteuerung der Pumpe und/oder des Ventils mit Hilfe der Steuereinrichtung, kann die Rezirkulation von dem zweiten Aufbereitungsbehälter zurück in den ersten Aufbereitungsbehälter von der Steuereinrichtung gesteuert bzw. geregelt werden, insbesondere kann die Rezirkulation beispielsweise durch Abschalten der Pumpe und/oder Schließen eines Ventils vollständig unterbrochen und wieder eingeschaltet werden. Die Rezirkulation ermöglicht es, einen Teil des in dem zweiten Aufbereitungsbehälters in einem zweiten Aufbereitungsschritt aufbereiteten Abwassers zurück in den ersten Aufbereitungsbehälter zu führen, um dort, wie nachfolgend beschreiben, einen dritten Aufbereitungsschritt durchzuführen. Es handelt sich dabei insbesondere um Abwasser, in dem durch die Sauerstoffzufuhr in dem zweiten Aufbereitungsbehälter das Ammonium bereits zu Nitrat umgesetzt worden ist.

Weiter bevorzugt ist die Steuereinrichtung derart ausgebildet, dass sie durch entsprechende Ansteuerung des Ventils und/oder der Pumpe eine Rezirkulation von dem zweiten Aufbereitungsbehälter in den ersten Aufbereitungsbehälter veranlasst, wenn die Sauerstoffzufuhreinrichtung in dem ersten Aufbereitungsbehälter ausgeschaltet ist und in dem ersten Aufbereitungsbehälter eine Umwandlung von Harnstoff in Ammoniak unter anaeroben Bedingungen stattfindet. In diesem Zustand ist es möglich, einen weiteren anaeroben Verfahrensschritt, welcher in bekannter Weise ein Denitrifizierungs-Schritt sein kann, gleichzeitig in dem ersten Aufbereitungsbehälter ablaufen zu lassen. Eine solche Denitrifizierung erfolgt in der Regel anaerob, d. h. ohne Sauerstoffzufuhr durch geeignete Bakterien, welche ggf. unter Zufuhr von Kohlenstoff das Nitrat in Stickstoff umsetzen, wobei zusätzlich CO₂ anfallen kann. Ein solcher Prozess kann in dem ersten Aufbereitungsbehälter bevorzugt mit Hilfe des Kohlenstoffes ablaufen, welcher durch das zugeführte Abwasser über die Abwasserzufuhr in den ersten Aufbereitungsbehälter eingeleitet wird.

Erfindungsgemäß ist es möglich, durch das Umschalten des Betriebs des ersten Aufbereitungsbehälters von einem aeroben in einen anaeroben Betriebszustand in diesem ersten Aufbereitungsbehälter gleichzeitig entweder eine Nitrifizierung oder eine Denitrifizierung durchzuführen. Auf diese Weise wird eine flexible Nutzung und insbesondere eine bessere Regelbarkeit der gesamten Abwasseraufbereitungsanlage erreicht. Gleichzeitig kann der Energiebedarf reduziert werden, da eine Luft- bzw. Sauerstoffzufuhr in dem ersten Aufbereitungsbehälter nur dann stattfinden muss, wenn sie tatsächlich erforderlich ist. Gleichzeitig kann durch die Denitrifizierung in dem ersten Aufbereitungsbehälter auch der Kohlenstoff, welcher ohnehin im Abwasser vorhanden ist, optimal ausgenutzt werden, so dass eine zusätzliche Kohlenstoffzufuhr reduziert oder vermieden werden kann.

Hinsichtlich der Umwandlung von Harnstoff in Ammoniak und Ammonium hat sich gezeigt, dass dieser Prozess, insbesondere unter Verwendung von bakteriell erzeugter Urease-Enzyme sowohl aerob als auch anaerob im Wesentlichen gleichermaßen gut abläuft, so dass dieser Prozess durch die Umschaltung im Wesentlichen nicht beeinflusst wird.

Gemäß einer weiteren bevorzugten Ausführungsform ist dem zweiten Aufbereitungsbehälter nachgeschaltet zumindest ein dritter Aufbereitungsbehälter angeordnet. Das bedeutet, dass das in dem zweiten Aufbereitungsbehälter aufbereitete Abwasser über eine geeignete Verbindungsleitung bzw. einen geeigneten Überlauf in den dritten Aufbereitungsbehälter überführt wird. Ggf. kann auch zwischen dem zweiten und dem dritten Aufbereitungsbehälter zumindest eine Pumpe zum Fördern des Abwassers vorgesehen sein. Der dritte Aufbereitungsbehälter ist mit einer Kohlenstoffzuführeinrichtung versehen, über welche Kohlenstoff, organisch gebundener Kohlenstoff zugeführt werden kann. Die Kohlenstoffzuführeinrichtung ist vorzugsweise von der Steuereinrichtung steuerbar, so dass die Kohlenstoffzufuhreinrichtung bevorzugt ein- und ausschaltbar, weiter bevorzugt jedoch derart steuer- oder regelbar ist, dass die Menge des zugeführten Kohlenstoffs über die Steuereinrichtung variiert werden kann. Im Betrieb der Abwasseraufbereitungsanlage erfolgt in dem dritten Aufbereitungsbehälter eine Umwandlung von Nitrat zu Stickstoff, d. h. eine Denitrifizierung unter der Zuführung von Kohlenstoff, wobei gleichzeitig ggf. Kohlenstoffdioxid freigesetzt wird. Auch dies erfolgt mit Hilfe geeigneter Bakterien, die in anaerober Umgebung, d. h. unter Sauerstoffabschluss das Nitrat aufspalten, so dass Stickstoff freigesetzt wird. Wenn ein solcher dritter Aufbereitungsbehälter vorhanden ist, kann der in dem dritten Aufbereitungsbehälter ablaufende Prozess zusätzlich oder alternativ auch in dem ersten Aufbereitungsbehälter durchgeführt werden, wenn dieser im anaeroben Betriebszustand ist und das Abwasser z.B. über die beschriebene Rezirkulationsleitung von dem zweiten Aufbereitungsbehälter in den ersten Aufbereitungsbehälter zurückgeführt wird. So kann die Kohlenstoffzufuhr in dem dritten Aufbereitungsbehälter ggf. reduziert oder ausgeschaltet werden, wenn für diesen Denitrifizierungsprozess in dem ersten Aufbereitungsbehälter im Abwasser ein ausreichend hoher Kohlenstoffanteil vorhanden ist. Alternativ könnte auch an dem ersten Aufbereitungsbehälter eine Kohlenstoffzufuhreinrichtung vorhanden sein.

Gemäß einer weiteren bevorzugten Ausführungsform ist ausgangsseitig der Aufbereitungsbehälter, d. h. vorzugsweise ausgangsseitig des in der Reihe letzten Aufbereitungsbehälters eine Schlammtrenneinrichtung angeordnet, welche Schlamm bzw. Klärschlamm von dem aufbereiteten Abwasser trennt. Das aufbereitete Abwasser kann dann z.B. in einen Sammelbehälter abgeführt werden oder sonst in geeigneter Weise abgeleitet werden. Der Schlamm kann entsorgt, aufbereitet oder weiterverwendet werden.

Besonders bevorzugt ist die Schlammtrenneinrichtung mit dem ersten Aufbereitungsbehälter über eine Schlammrückführung verbunden. Diese dient dazu, den aktivierten Schlamm bzw. Klärschlamm weiter zu nutzen und im Prozess zu halten. So können insbesondere die im Schlamm vorhandenen Bakterienkulturen erhalten werden und dem Prozess am Anfang in dem ersten Aufbereitungsbehälter wieder zugeführt werden.

Die Steuereinrichtung der Abwasseraufbereitungsanlage kann neben den beschriebenen Funktionen weitere Steuerfunktionen aufweisen. Dies kann insbesondere die Steuerung vorhandener Pumpen, beispielsweise in der Schlammrückführung oder auch in den Leitungen zwischen den Aufbereitungsbehältern und ggf. einer Schlammtrenneinrichtung sein. Diese können von der Steuereinrichtung ein- und ausschaltbar oder ggf. in ihrer Drehzahl regelbar sein, um den Medientransport in Menge und Geschwindigkeit steuern bzw. regeln zu können. Darüber hinaus kann die Steuereinrichtung zur Steuerung der beschriebenen Kohlenstoffzufuhr und ggf. der Luft- bzw. Sauerstoffzufuhr in den ersten Aufbereitungsbehälter und/oder dem zweiten Aufbereitungsbehälter ausgebildet sein, wobei die Sauerstoff- bzw. Luftzufuhr vorzugsweise nicht nur ein- und ausschaltbar, sondern auch in der Menge regelbar ist. Darüber hinaus kann die Steuereinrichtung zur pH-Wertkontrolle ausgebildet sein, um den pH-Wert im System, insbesondere in dem ersten Aufbereitungsbehälter in einem gewünschten Bereich, beispielsweise im neutralen Bereich, d.h. z.B. zwischen 6,6 und 8,5 zu halten. Dazu kann die Steuereinrichtung ferner mit geeigneten Sensoren verbunden sein, welche Sauerstoffkonzentrationen, Ammonium- sowie Nitrat-Konzentrationen und/oder den pH-Wert erfassen und der Steuereinrichtung zu der beschriebenen Steuerung bzw. Regelung als Eingangsgrößen zuführen können.

Neben der beschriebenen Abwasseraufbereitungsanlage ist Gegenstand der Erfindung ein Abwasseraufbereitungsverfahren zur Aufbereitung harnstoffhaltiger, insbesondere stark harnstoffhaltiger Abwässer. Dieses Abwasseraufbereitungsverfahren ist insbesondere dazu geeignet, unter Anwendung der vorangehend beschriebenen Abwasseraufbereitungsanlage ausgeführt zu werden. Es ist zu verstehen, dass anhand des Abwasseraufbereitungsverfahrens beschriebene Verfahrensabläufe bzw. Verfahrensmerkmale in bevorzugter Ausgestaltung auch bei dem nachfolgend beschriebenen Abwasseraufbereitungsverfahren zur Anwendung kommen können. Insofern wird bezüglich dieser Merkmale auf die vorangehende Beschreibung verwiesen.

Gemäß dem erfindungsgemäßen Abwasseraufbereitungsverfahren wir in einem ersten Aufbereitungsschritt Harnstoff in Ammoniak umgewandelt, wobei dies vorzugsweise durch Urease bzw. Urease Enzyme erfolgt, welche weiterbevorzugt durch Bakterien gebildet werden, wie es oben beschreiben worden ist. Erfindungsgemäß kann dieser erste Aufbereitungsschritt wahlweise aerob oder anaerob durchgeführt werden, d. h. das Verfahren ist so ausgestaltet, dass der erste Aufbereitungsschritt von aerob in anaerob und umgekehrt gewechselt werden kann, so dass dieser Aufbereitungsschritt geändert bzw. angepasst werden kann, um den gesamten Abwasseraufbereitungsprozess besser regeln bzw. steuern zu können und, wie oben beschreiben, bei minimalem Energieeinsatz eine optimale Abwasseraufbereitung erreichen zu können. Der Wechsel zwischen aerob und anaerob hat den Vorteil, dass gleichzeitig mit der Umwandlung des Harnstoffs in Ammoniak ein weiterer Aufbereitungsschritt stattfinden kann, nämlich wahlweise ein aerob oder anaerob ablaufender Aufbereitungsschritt, wie es oben beschrieben wurde.

Erfindungsgemäß wird der erste Aufbereitungsschritt aerob durchgeführt, wenn eine Ammonium- oder Ammoniakkonzentration in dem aufbereiteten Abwasser, d. h. vorzugsweise ausgangsseitig des gesamten Aufbereitungsprozesses einen vorgegebenen Grenzwert überschreitet. Durch die aerobe Ausführung des ersten Aufbereitungsschrittes wird es möglich, parallel im selben Aufbereitungsbehälter eine Nitrifizierung durchzuführen, um das Ammonium abzubauen und in Nitrit bzw. Nitrat umzuwandeln, wie es oben beschreiben wurde.

Das erfindungsgemäße Verfahren ist weiter so ausgebildet, dass in einem zweiten Aufbereitungsschritt unter Sauerstoffzufuhr eine Umwandlung von Ammonium und/oder Ammoniak in Nitrit bzw. Nitrat erfolgt. Dieser zweite Aufbereitungsschritt erfolgt nachfolgend zu dem ersten Aufbereitungsschritt in einem zweiten Aufbereitungsbehälter, in welchem aerobe Bedingungen herrschen, d. h. Luft bzw. Sauerstoff zugeführt wird.

Wenn der ersten Aufbereitungsschritt aerob durchgeführt wird, wird der zweite Aufbereitungsschritt vorzugsweise zumindest teilweise gemeinsam mit dem ersten Aufbereitungsschritt in demselben Aufbereitungsbehälter durchgeführt. So kann eine gleichzeitige Nitrifizierung in dem ersten Aufbereitungsbehälter gemeinsam mit dem ersten Aufbereitungsschritt einen Nitrifizierungsprozess in einem zweiten Aufbereitungsbehälter unterstützen, um zu einem schnelleren Ammoniumabbau zu gelangen. Diesbezüglich wird auf die obige Beschreibung hinsichtlich der Abwasseraufbereitungsanlage verwiesen.

Bevorzugt weist das Verfahren einen dritten Aufbereitungsschritt auf, bei welchem unter Kohlenstoffzufuhr eine Umwandlung von Nitrat in Stickstoff erfolgt. Dies erfolgt, wie oben beschrieben, unter anaeroben Bedingungen, d. h. unter Sauerstoffabschluss. Bevorzugt kann für diesen dritten Aufbereitungsschritt ein separater Aufbereitungsbehälter vorgesehen sein, welcher vorzugsweise den Aufbereitungsbehältern, in denen die vorangehend beschriebenen Aufbereitungsschritte durchgeführt werden, nachgeschaltet ist.

Wenn der erste Aufbereitungsschritt anaerob durchgeführt wird, wird der dritte Aufbereitungsschritt vorzugsweise zumindest teilweise gemeinsam mit dem ersten Aufbereitungsschritt in demselben Aufbereitungsbehälter durchgeführt. Dabei kann ggf. auf eine Kohlenstoffzufuhr verzichtet werden und die Denitrifizierung allein mit Hilfe des im Abwasser vorhandenen Kohlenstoffes durchgeführt werden. Die Ausführung dieses dritten Aufbereitungsschrittes gleichzeitig zu dem ersten Aufbereitungsschritt in demselben Behälter hat den Vorteil, dass auf einen zusätzlichen Behälter für die Denitrifizierung verzichtet werden kann oder aber ein Denitrifizierungsprozess in einem solchen zusätzlichen Behälter durch die Denitrifizierung gemeinsam mit dem ersten Aufbereitungsschritt unterstützt werden kann. Dadurch wird ein größerer Regelbereich bzw. eine bessere Anpassbarkeit der Anlage im Betrieb an sich ändernde Betriebsbedingungen erreicht.

Nachfolgend wird die Erfindung beispielhaft anhand der beigefügten Figur beschrieben. Diese zeigt schematisch einen bevorzugten Aufbau einer Abwasseraufbereitungsanlage.

Die im Beispiel gezeigte Abwasseraufbereitungsanlage weist drei Aufbereitungsbehälter 2, 4 und 6 auf, welche in Reihe angeordnet sind. Der erste Aufbereitungsbehälter 2 weist eine Abwasserzufuhr- bzw. einen Abwasserzulauf 8 auf. Aus dem ersten Aufbereitungsbehälter 2 strömt das Abwasser über eine Verbindung 10 in den zweiten Aufbereitungsbehälter 4 und von dem zweiten Aufbereitungsbehälter 4 über eine Verbindung 12 in den dritten Aufbereitungsbehälter 6. Die Verbindungen 10, 12 sind hier als einfache Verbindungsleitungen dargestellt. Es ist jedoch zu verstehen, dass in den Verbindungen 10, 12 ggf. auch Pumpen zum Fördern der Flüssigkeit von einem Aufbereitungsbehälter in den anderen angeordnet sein könnten.

In dem ersten Aufbereitungsbehälter 2 ist eine durch ein Gebläse bzw. einen Kompressor 14 gespeiste Belüftungseinrichtung 16 angeordnet. Die Belüftungseinrichtung 16 dient der Sauerstoffzufuhr in das Innere des Aufbereitungsbehälters 2. In dem ersten Aufbereitungsbehälter 2 ist darüber hinaus eine Umwälzeinrichtung 18 angeordnet. Ferner sind an dem ersten Aufbereitungsbehälter 2 noch ein pH-Wert-Sensor 20 sowie ein Sauerstoffsensor 22 angeordnet, welcher die Menge des gelösten Sauerstoffes in der Flüssigkeit in dem Aufbereitungsbehälter 2 erfasst.

In dem zweiten Aufbereitungsbehälter 4 ist ebenfalls eine Belüftungseinrichtung 24 angeordnet, welche von einem Gebläse bzw. Kompressor 26 gespeist wird. Die Belüftungseinrichtung 24 dient der Sauerstoffzufuhr in das Innere des zweiten Aufbereitungsbehälters 4. An dem zweiten Aufbereitungsbehälter 4 ist darüber hinaus ein Sauerstoffsensor 28 angeordnet, um den Sauerstoffgehalt des Wassers im Inneren des Aufbereitungsbehälters 4 zu erfassen.

In dem dritten Aufbereitungsbehälter 6 ist eine Umwälzeinrichtung 30 angeordnet. Die Umwälzeinrichtungen 18 und 30 können beispielsweise als Rührwerke oder Umwälzpumpen ausgebildet sein. An dem dritten Aufbereitungsbehälter 6 ist darüber hinaus eine Kohlenstoffzufuhr 32 angeordnet, über welche Kohlenstoff in das Innere des Aufbereitungsbehälters 6 dosiert werden kann.

Ausgangsseitig ist der dritte Aufbereitungsbehälter 6 mit einer Schlammtrenneinrichtung 34 verbunden, welcher das aus dem dritten Aufbereitungsbehälter 6 austretende Abwasser über eine Verbindung mit einer Förderpumpe 36 zugeführt wird. Austrittsseitig der Schlammtrenneinrichtung 34 schließt sich ein Sammelbehälter 38 an, in welchem das aufbereitete Abwasser gesammelt wird, bevor es dann über einen Auslass 40 in geeigneter Weise abgelassen wird. An dem Sammelbehälter 38 ist ein Ammoniumsensor 42 angeordnet, welcher die Ammoniumkonzentration in dem Abwasser in dem Sammelbehälter 38 erfasst. Ferner ist ein Nitratsensor 44 an dem Sammelbehälter 38 angeordnet, welcher den Nitratgehalt bzw. die Nitratkonzentration in dem Abwasser in dem Sammelbehälter 38 erfasst.

Die Abwasseraufbereitungsanlage weist darüber hinaus eine Steuereinrichtung 46 auf, welche die gesamte Anlage steuert und dazu mit allen wesentlichen Komponenten zu deren Steuerung verbunden ist.

Von der Schlammtrenneinrichtung 34 verläuft eine Schlammrückführung 46 in den ersten Aufbereitungsbehälter 2, wobei die Schlammrückführung 46 mit einer Förderpumpe 48 versehen ist. Der zweite Aufbereitungsbehälter 4 ist darüber hinaus mit dem ersten Aufbereitungsbehälter 2 über eine Rezirkulationsleitung 50 verbunden, in welcher eine Pumpe 52 angeordnet ist, um Flüssigkeit aus dem zweiten Aufbereitungsbehälter 4 zurück in den ersten Aufbereitungsbehälter 2 zu fördern. Ferner ist noch eine pH-Wert-Einstelleinrichtung 54 vorgesehen, über welche der pH-Wert des über den Abwasserzulauf 8 in den ersten Aufbereitungsbehälter 2 einströmenden Abwassers eingestellt wird.

Die Funktionsweise der gezeigten Abwasseraufbereitungsanlage ist wie folgt. Grundsätzlich findet im ersten Aufbereitungsbehälter 2 eine Umwandlung von Harnstoff oder Aminosäuren in Ammoniak und anschließend in Ammonium statt. In dem zweiten Aufbereitungsbehälter 4 findet eine Nitrifikation statt, bei welcher das Ammonium in Nitrat umgewandelt wird. In dem dritten Aufbereitungsbehälter 6 findet eine Denitrifikation statt, bei welcher unter Zusatz von Kohlenstoff mittels der Kohlenstoffzufuhr 32 das Nitrat in Stickstoff und Kohlenstoffdioxid umgewandelt wird.

Der Prozess in dem zweiten Aufbereitungsbehälter 4 muss stets aerob durchgeführt werden. Die Umwandlung von Ammonium in Nitrat erfolgt durch geeignete Bakterien. Gleichzeitig wird Sauerstoff über das Gebläse 26 und die Belüftungseinrichtung 24 in den zweiten Aufbereitungsbehälter 4 eingeleitet. Die Sauerstoffzufuhr kann geregelt werden, indem der Sauerstoffgehalt über den Sauerstoffsensor 28 erfasst und das Gebläse 26 entsprechend eingestellt wird. Dazu kann eine autarke Regeleinrichtung vorgesehen sein. Alternativ kann diese Regelung ebenfalls von der Steuereinheit 46 übernommen werden.

Der Prozess im dritten Aufbereitungsbehälter 6 findet ohne Sauerstoffzufuhr, vorzugsweise unter Sauerstoffabschluss, d. h. anaerob statt. In dem dritten Aufbereitungsbehälter 6 erfolgt lediglich eine Umwälzung über die Umwälzeinrichtung 30. Ferner wird Kohlenstoff über die Kohlenstoffzufuhr 32 in geeigneter Menge zudosiert. Die Umwandlung von Nitrat in Stickstoff erfolgt hier ebenfalls durch geeignete Bakterien. Die Kohlenstoffzufuhr 32 wird vorzugsweise ebenfalls über die Steuereinrichtung 46 gesteuert bzw. geregelt, wie in der Figur durch die gestrichelte Linie angedeutet.

Der Umwandlungsprozess von Harnstoff in Ammoniak und dann in Ammonium erfolgt durch Urease-Enzyme, welche durch geeignete Bakterien erzeugt werden. Erfindungswesentlich ist, dass dieser Prozess mit ähnlich gleichem Wirkungsgrad sowohl aerob als auch anaerob ausgeführt werden kann und dass die Abwasseraufbereitungsanlage dazu geeignet ist, zwischen diesen beiden Betriebszuständen in dem ersten Aufbereitungsbehälter 2 zu wechseln. Dazu wird die Belüftungseinrichtung 16 bzw. deren Gebläse 14 über die Steuereinrichtung 46 gesteuert bzw. ein- und ausgeschaltet. Ferner steuert die Steuereinrichtung 46 auch die Umwälzeinrichtung 18 sowie die Pumpe 52 in der Rezirkulationsleitung 50.

Wenn der Prozess in dem ersten Aufbereitungsbehälter 2 anaerob ausgeführt werden soll, wird die Belüftungseinrichtung 16 durch Abschalten des Gebläses 14 außer Betrieb genommen, so dass keine Luft und kein Sauerstoff in den Aufbereitungsbehälter 2 zugeführt werden. Gleichzeitig wird von der Steuereinrichtung 46 die Umwälzeinrichtung 18 eingeschaltet. Ferner wird von der Steuereinrichtung 46 die Pumpe 52 eingeschaltet, so dass aus dem zweiten Aufbereitungsbehälter 4 dort aufbereitetes Abwasser zumindest teilweise wieder zurück in den ersten Aufbereitungsbehälter 2 geführt wird. Das in dem zweiten Aufbereitungsbehälter 4 aufbereitete Abwasser enthält durch die dort erfolgte Umwandlung Nitrat, welches über die Rezirkulationsleitung 50 in den ersten Aufbereitungsbehälter 2 zurückgeführt wird. Da dort anaerobe Bedingungen herrschen, kann dort zusammen mit dem Kohlenstoff, welcher in dem Abwasser, welches über den Abwasserzulauf 8 zugeführt wird, ohnehin enthalten ist, die beschriebene Denitrifikation stattfinden. D. h. Bakterien spalten das Nitrat auf und wandeln es in Stickstoff und ggf. Kohlenstoffdioxid um, welche in die Atmosphäre entlassen werden. So kann dieser Denitrifikations-Prozess den Denitrifikationsprozess im dritten Aufbereitungsbehälter 6 unterstützen oder auch vollständig ersetzen. Dadurch kann über die Kohlenstoffzufuhr 32 zugeführter Kohlenstoff eingespart werden. Die Abwasseraufbereitungsanlage wird vorzugsweise in diesem Zustand mit dem anaeroben Prozess in dem ersten Aufbereitungsbehälter 2 betrieben, wenn über den Ammoniumsensor 42 in dem aufbereiteten Abwasser keine zu hoher Ammoniumgehalt erfasst wird, d. h. der Ammoniumgehalt unter einem vorgegebenen Grenzwert liegt. Ferner kann diese Verfahrensvariante zum Einsatz kommen, wenn über den Nitratsensor 44 in dem aufbereiteten Abwasser ein zu hoher Nitratgehalt festgestellt wird, d. h. ein Nitratgehalt, welcher einen vorbestimmten Grenzwert überschreitet. In diesem Fall kann der Denitrifikationsprozess in dem Aufbereitungsbehälter 6 mit maximaler Leistung betrieben werden und zusätzlich durch die in dem ersten Sammelbehälter 38 unter anaeroben Bedingungen ablaufende Denitrifikation unterstützt werden. Wenn sowohl die Ammonium- als auch die Nitratgrenzwerte unterschritten sind, kann der Denitrifikationsprozess in dem dritten Sammelbehälter 6 durch Drosselung der Kohlenstoffzufuhr 32 heruntergefahren werden, um die Denitrifikation zum Teil oder weitgehend in dem ersten Aufbereitungsbehälter 2 durchzuführen.

Wenn mit dem Ammoniumsensor 42 im aufbereiteten Abwasser ein zu hoher Ammoniumgehalt ermittelt wird, d. h. ein zulässiger Grenzwert überschritten ist, schaltet die Steuereinrichtung 46 den Verfahrensablauf in dem ersten Aufbereitungsbehälter 2 in einen aeroben Betriebszustand um, in dem die Umwälzeinrichtung 18 deaktiviert und gleichzeitig die Sauerstoffzufuhr über die Belüftungseinrichtung 16 aktiviert wird. Dazu wird das Gebläse 14 eingeschaltet. Gleichzeitig wird die Pumpe 52 abgeschaltet, so dass die Rezirkulation von dem zweiten Aufbereitungsbehälter 4 in den ersten Aufbereitungsbehälter 2 unterbunden wird. In dem aeroben Prozess kann über den Sauerstoffsensor 22 der Sauerstoffgehalt in dem ersten Sammelbehälter erfasst werden und über Einstellung der zugeführten Luftmenge von der Steuereinrichtung 46 geregelt werden. Dazu kann beispielsweise das Gebläse 14 in seiner Drehzahl einstellbar sein. Unter aeroben Bedingungen läuft die Umwandlung von Harnstoff in Ammonium in gleicher Weise weiter wie unter anaeroben Bedingungen. Die aeroben Bedingungen in dem ersten Aufbereitungsbehälter 2 ermöglichen es, dass gleichzeitig in dem ersten Aufbereitungsbehälter 2 ein Teil der Nitrifikation ablaufen kann. D. h. auch in dem ersten Aufbereitungsbehälter 2 findet durch Bakterien unter Sauerstoffzufuhr eine Umwandlung von Ammonium in Nitrat, ggf. über den Zwischenschritt einer Umwandlung in Nitrit statt. Somit wird der Prozess in dem zweiten Aufbereitungsbehälter 4 unterstützt, so dass gleichzeitig eine größere Menge von Ammonium in Nitrat umgewandelt werden kann und die Menge des im aufbereiteten Abwasser enthaltenen Ammoniums reduziert werden kann.

Über die Schlammrückführung 46 wird der aktivierte Schlamm bzw. Klärschlamm aus der Schlammtrenneinrichtung 34 zurück in den ersten Aufbereitungsbehälter 2 geführt. Dadurch wird erreicht, dass die für die beschriebenen Prozesse erforderlichen Bakterien in dem Abwasserstrom durch die drei Aufbereitungsbehälter 2, 4 und 6 in ausreichender Menge erhalten bleiben. D. h. der Schlamm und dessen Inhaltsstoffe, wie Bakterien und Enzyme, verbleiben zumindest zum Teil in der Anlage, während lediglich das aufbereitete Abwasser aus der Schlammtrenneinrichtung 34 in den Auslass 40 abgeführt wird. Auch die Schlammrückführung kann ggf. durch die Steuereinrichtung 46 gesteuert bzw. geregelt werden, indem diese beispielsweise die Förderpumpe 48 steuert. Darüber hinaus könnte die Steuereinrichtung 46 auch alle übrigen Pumpen im System, wie beispielsweise die Förderpumpe 36 steuern bzw. regeln. Auch die Umwälzeinrichtung 30 könnte von der Steuereinrichtung 46 gesteuert bzw. geregelt werden. Das Gleiche gilt für die pH-Wert-Einstelleinrichtung.

Wesentlich für die Erfindung ist, dass durch das Umschalten des Prozesses in dem ersten Aufbereitungsbehälter 2 von einem aeroben in einen anaeroben Prozess eine bessere Anpassung der Abwasseraufbereitungsanlage an verschiedene Anforderungen möglich ist, um sowohl stets eine ausreichende Nitratreduzierung als auch eine ausreichende Ammoniumreduzierung bei gleichzeitig möglichst minimalem Energie- und Kohlenstoffbedarf zu erreichen. Anstelle die Luft- bzw. Sauerstoffzufuhr über die Gebläse 14 und 26 einzustellen bzw. zu regeln, könnten auch geeignete Ventile zur Regulierung vorgesehen sein, so dass ggf. auch eine gemeinsame Luftzufuhr, beispielsweise ein gemeinsamer Kompressor für die beiden Belüftungseinrichtungen 16 und 24 verwendet werden könnte. Anstatt einer Luftzufuhr könnte auch eine Sauerstoffzufuhr vorgesehen sein, über welche reiner Sauerstoff in den zweiten Aufbereitungsbehälter 4 und ggf. den ersten Aufbereitungsbehälter 2, wenn dieser im aeroben Zustand betrieben wird, eingeleitet wird.

### Bezugszeichenliste

- 2, 4, 6: - Aufbereitungsbehälter
- 8: - Abwasserzulauf
- 10, 12: - Verbindungen
- 14: - Gebläse oder Kompressor
- 16: - Belüftungseinrichtung
- 18: - Umwälzeinrichtung
- 20: - PH-Wert-Sensor
- 22: - Sauerstoffsensor
- 24: - Belüftungseinrichtung
- 26: - Gebläse oder Kompressor
- 28: - Sauerstoffsensor
- 30: - Umwälzeinrichtung
- 32: - Kohlenstoffzufuhr bzw. Kohlenstoffzufuhreinrichtung
- 34: - Schlammtrenneinrichtung
- 36: - Förderpumpe
- 38: - Sammelbehälter
- 40: - Auslass
- 42: - Ammoniumsensor
- 44: - Nitratsensor
- 46: - Schlammrückführung
- 48: - Förderpumpe
- 50: - Rezirkulationsleitung
- 52: - Pumpe
- 54: - PH-Wert-Einstelleinrichtung

## Patentansprüche

1. Abwasseraufbereitungsanlage zur Aufbereitung von harnstoffhaltigen Abwässern mit zumindest einem ersten Aufbereitungsbehälter (2), welcher eine Abwasserzufuhr (8) aufweist, die dazu ausgestaltet ist, dass über die Abwasserzufuhr (8) harnstoffhaltiges Abwasser in den ersten Aufbereitungsbehälter (2) einleitbar ist, wobei der erste Aufbereitungsbehälter (2) dazu ausgestaltet ist, dass im Betrieb der Abwasseraufbereitungsanlage in dem ersten Aufbereitungsbehälter (2) durch Urease-Enzyme Harnstoff in Ammoniak umwandelbar ist,
**dadurch gekennzeichnet, dass**
an oder in dem ersten Aufbereitungsbehälter (2) oder der Abwasserzufuhr (8) eine Sauerstoffzufuhreinrichtung (14, 16), insbesondere in Form einer Belüftungseinrichtung (16), angeordnet ist und die Abwasseraufbereitungsanlage eine Steuereinrichtung (46) aufweist, über welche die Sauerstoffzufuhreinrichtung (14, 16) derart ein- und ausschaltbar ist, dass die Umwandlung von Harnstoff in Ammoniak sowohl aerob als auch anaerob durchführbar ist und die Abwasseraufbereitungsanlage zwischen einem aeroben Betriebszustand und einem anaeroben Betriebszustand in dem ersten Aufbereitungsbehälter (2) wechselt, wobei dem ersten Aufbereitungsbehälter (2) nachgeschaltet zumindest ein zweiter Aufbereitungsbehälter (4) angeordnet ist, welcher mit einer Sauerstoffzufuhreinrichtung (24, 26), insbesondere in Form einer Belüftungseinrichtung (24), versehen ist, wobei im Betrieb der Abwasseraufbereitungsanlage in dem zweiten Aufbereitungsbehälter (4) unter Luftzufuhr Ammoniak und/oder Ammonium in dem Abwasser in Nitrat umwandelbar ist, wobei ein mit der Steuereinrichtung (46) verbundener erster Sensor (42, 44) vorhanden ist, welcher zur Erfassung einer Ammonium- oder Ammoniak-Konzentration ausgebildet ist, wobei die Steuereinrichtung (46) derart ausgebildet ist, dass sie die Sauerstoffzufuhreinrichtung (14, 16) in dem ersten Aufbereitungsbehälter (2) in Abhängigkeit einer von dem ersten Sensor (42, 44) erfassten Ammonium- oder Ammoniak-Konzentration derart ein- und ausschaltet, dass dem ersten Aufbereitungsbehälter (2) Sauerstoff zugeführt wird, wenn die Ammonium- oder Ammoniak-Konzentration in dem aufbereiteten Abwasser einen vorgegebenen Grenzwert überschreitet, und dem ersten Aufbereitungsbehälter (2) kein Sauerstoff zugeführt wird, wenn eine Ammonium- oder Ammoniak-Konzentration in dem aufbereiteten Abwasser unter dem vorgegebenen Grenzwert liegt.

2. Abwasseraufbereitungsanlage nach Anspruch 1, **dadurch gekennzeichnet, dass** der zumindest eine erste Sensor (42, 44) an einer Ausgangsseite der Abwasseraufbereitungsanlage angeordnet ist.

3. Abwasseraufbereitungsanlage nach einem der vorangehenden Ansprüche, **dadurch gekennzeichnet, dass** in dem ersten Aufbereitungsbehälter (2) zumindest eine Umwälzeinrichtung (18) angeordnet ist, welche von der Steuereinrichtung (46) ein- und ausschaltbar ist, wobei die Steuereinrichtung (46) vorzugsweise derart ausgebildet ist, dass die Umwälzeinrichtung (18) eingeschaltet ist, wenn die Sauerstoffzufuhreinrichtung (14, 16) ausgeschaltet ist.

4. Abwasseraufbereitungsanlage nach einem der vorangehenden Ansprüche, **dadurch gekennzeichnet, dass** der zweite Aufbereitungsbehälter (4) mit dem ersten Aufbereitungsbehälter (2) über eine Rezirkulationsleitung (50) verbunden ist, in welcher eine von der Steuereinrichtung (46) angesteuerte Pumpe (52) und/oder ein von der Steuereinrichtung (46) angesteuertes Ventil angeordnet ist.

5. Abwasseraufbereitungsanlage nach Anspruch 4, **dadurch gekennzeichnet, dass** die Steuereinrichtung (46) derart ausgebildet ist, dass sie durch entsprechende Ansteuerung des Ventils und/oder der Pumpe (52) eine Rezirkulation von dem zweiten Aufbereitungsbehälter (4) in den ersten Aufbereitungsbehälter (2) veranlasst, wenn die Sauerstoffzufuhreinrichtung (14, 16) in dem ersten Aufbereitungsbehälter (2) ausgeschaltet ist und in dem ersten Aufbereitungsbehälter (2) eine Umwandlung von Harnstoff in Ammoniak unter anaeroben Bedingungen stattfindet.

6. Abwasseraufbereitungsanlage nach einem der vorangehenden Ansprüche, **dadurch gekennzeichnet, dass** dem zweiten Aufbereitungsbehälter (4) nachgeschaltet zumindest ein dritter Aufbereitungsbehälter (6) angeordnet ist, welcher mit einer Kohlenstoffzuführeinrichtung (32) versehen ist, welche vorzugsweise von der Steuereinrichtung (46) steuerbar ist, wobei im Betrieb der Abwasseraufbereitungsanlage in dem dritten Aufbereitungsbehälter (6) eine Umwandlung von Nitrat in Stickstoff erfolgt.

7. Abwasseraufbereitungsanlage nach einem der vorangehenden Ansprüche, **dadurch gekennzeichnet, dass** ausgangseitig der Aufbereitungsbehälter (2, 4, 6) eine Schlammtrenneinrichtung (34) angeordnet ist, welche Schlamm von aufbereitetem Abwasser trennt.

8. Abwasseraufbereitungsanlage nach Anspruch 7, **dadurch gekennzeichnet, dass** die Schlammtrenneinrichtung (34) mit dem ersten Aufbereitungsbehälter (2) über eine Schlammrückführung (46) verbunden ist.

9. Abwasseraufbereitungsverfahren zur Aufbereitung harnstoffhaltiger Abwässer, insbesondere zur Anwendung in einer Abwasseraufbereitungsanlage gemäß einem der Ansprüche 1 bis 8, bei welchem in einem ersten Aufbereitungsschritt in einem ersten Aufbereitungsbehälter (2) durch Urease-Enzyme Harnstoff in Ammoniak umgewandelt wird, wobei der erste Aufbereitungsschritt wahlweise aerob oder anaerob durchgeführt wird, wobei in einem zweiten Aufbereitungsschritt in einem dem ersten Aufbereitungsbehälter (2) nachgeschalteten zweiten Aufbereitungsbehälter (4) unter Sauerstoffzufuhr eine Umwandlung von Ammonium und/oder Ammoniak in Nitrat erfolgt,
**dadurch gekennzeichnet, dass**
der erste Aufbereitungsschritt aerob durchgeführt wird, wenn eine Ammonium- oder Ammoniak-Konzentration in dem aufbereiteten Abwasser einen vorgegebenen Grenzwert überschreitet, und anaerob durchgeführt wird, wenn eine Ammonium- oder Ammoniak-Konzentration in dem aufbereiteten Abwasser unter dem vorgegebenen Grenzwert liegt.

10. Abwasseraufbereitungsverfahren nach Anspruch 9, **dadurch gekennzeichnet, dass**, wenn der erste Aufbereitungsschritt aerob durchgeführt wird, der zweite Aufbereitungsschritt teilweise gemeinsam mit dem ersten Aufbereitungsschritt in demselben Aufbereitungsbehälter durchgeführt wird.

11. Abwasseraufbereitungsverfahren nach Anspruch 9 oder 10, **gekennzeichnet durch** einen dritten Aufbereitungsschritt, bei welchem unter Kohlenstoffzufuhr eine Umwandlung von Nitrat in Stickstoff erfolgt.

12. Abwasseraufbereitungsverfahren nach Anspruch 11, **dadurch gekennzeichnet, dass**, wenn der erste Aufbereitungsschritt anaerob durchgeführt wird, der dritte Aufbereitungsschritt zumindest teilweise gemeinsam mit dem ersten Aufbereitungsschritt in demselben Aufbereitungsbehälter durchgeführt wird.

## Claims

1. A waste water treatment facility for treating urea-containing waste water, with at least one first treatment container (2) which comprises a waste water feed (8) which is designed, for urea-containing waste water to be able to be introduced into the first treatment container (2) via the waste water feed (8), wherein the first treatment container (2) is designed for urea to be able to be converted into ammonia by way of urease enzymes in the first treatment container (2) on operation of the waste water treatment facility,
**characterised in that**
an oxygen feed device (14, 16), in particular in the form of an aeration device (16) is arranged on or in the first treatment container (2) or the waste water feed (8), and the waste water treatment facility comprises a control device (46), via which the oxygen feed device (14, 16) can be switched on and off in a manner such that the conversion of urea into ammonia can be selectively carried out in an aerobic or anaerobic manner and the waste water treatment facility changes between an aerobic operating state and an anaerobic operating state in the first treatment container (2), wherein at least one second treatment container (4) which is provided with an oxygen feed device (24, 26), in particular in the form of an aeration device (24) is arranged downstream of the first treatment container (2), wherein ammonia and/or ammonium in the waste water can be converted into nitrate in the second treatment container (4) amid the feed of air, on operation of the waste water treatment facility, wherein a first sensor (42, 44) which is connected to the control device (46) and which is designed for the detection of an ammonium concentration or ammonia concentration is present, wherein the control device (46) is designed in a manner such that it switches the oxygen feed device (14, 16) in the first treatment container (2) on and off in dependence of an ammonium concentration or ammonia concentration which is detected by the first sensor (42, 44), in a manner such that oxygen is fed to the first treatment container (2) when the ammonium concentration or ammonia concentration in the treated waste water exceeds a predefined limit value, and no oxygen is fed to the first treatment container (2) when an ammonium concentration or ammonia concentration in the treated waste water lies below the predefined limit value.

2. A waste water treatment facility according to claim 1, **characterised in that** the at least one first sensor (42, 44) is arranged at an exit side of the waste water treatment facility.

3. A waste water treatment facility according to one of the preceding claims, **characterised in that** at least one circulation device (18) which can be switched on and off by the control device (46) is arranged in the first treatment container (2), wherein the control device (46) is preferably designed in a manner such that the circulation device (18) is switched on when the oxygen feed device (14, 16) is switched off.

4. A waste water treatment facility according to one of the preceding claims, **characterised in that** the second treatment container (4) is connected to the first treatment container (2) via a recirculation conduit (50), in which a pump (52) which is activated by the control device (46) and/ or a valve which is activated by the control device (46) is arranged.

5. A waste water treatment facility according to claim 4, **characterised in that** the control device (46) is designed in a manner such that by way of a suitable activation of the valve and/or the pump (52), it initiates a recirculation from the second treatment container (4) into the first treatment container (2) when the oxygen feed device (14, 16) in the first treatment container (2) is switched off and a conversion of urea into ammonia takes place under anaerobic conditions in the first treatment container (2).

6. A waste water treatment facility according to one of the preceding claims, **characterised in that** at least one third treatment container (6) is arranged downstream of the second treatment container (4) and is provided with a carbon feed device (32) which is preferably controllable by the control device (46), wherein a conversion of nitrate into nitrogen takes place in the third treatment container (6) on operation of the waste water treatment facility.

7. A waste water treatment facility according to one of the preceding claims, **characterised in that** a sludge separation device (34) which separates sludge from the treated waste water is arranged at the exit side of the treatment container (2, 4, 6).

8. A waste water treatment facility according to claim 7, **characterised in that** the sludge separation device (34) is connected via a sludge return feed (46) to the first treatment container (2).

9. A waste water treatment method for treating urea-containing waste water, in particular for use in a waste water treatment facility according to one of the claims 1 to 8, with which urea is converted into ammonia by urease enzymes in a first treatment container (2) in a first treatment step, wherein the first treatment step is carried out selectively in an aerobic or anaerobic manner, wherein a conversion of ammonium and/or ammonia into nitrate amid the supply of oxygen is effected in a second treatment container (4) which is arranged downstream of the first treatment container (2), in a second treatment step,
**characterised in that**
the first treatment step is carried out aerobically if an ammonium or ammonia concentration in the treated waste water exceeds a predefined limit value, and carried out anaerobically if an ammonium or ammonia concentration in the treated waste water lies below the predefined limit value.

10. A waste water treatment method according to claim 9, **characterised in that** if the first treatment step is carried out aerobically, the second treatment step is partly carried out together with the first treatment step in the same treatment container.

11. A waste water treatment method according to claim 9 or 10, **characterised by** a third treatment step, with which a conversion of nitrate into nitrogen is effected amid the feed of carbon.

12. A waste water treatment method according to claim 11, **characterised in that** if the first treatment step is carried out anaerobically, the third treatment step at least partly is carried out together with the first treatment step in the same treatment container.

## Revendications

1. Installation de traitement d'eaux usées pour le traitement d'eaux usées contenant de l'urée, comprenant au moins un premier contenant de traitement (2) qui comporte une amenée d'eaux usées (8) configurée de façon que des eaux usées contenant de l'urée puissent être amenées, via l'amenée d'eaux usées (8), dans le premier contenant de traitement (2), le premier contenant de traitement (2) étant configuré de façon que, lors du fonctionnement de l'installation de traitement d'eaux usées, dans le premier contenant de traitement (2), de l'urée puisse être transformée en ammoniac par des enzymes d'uréase,
**caractérisée en ce que**
sur ou dans le premier contenant de traitement (2) ou l'amenée d'eaux usées (8), un dispositif d'amenée d'oxygène (14, 16), notamment sous la forme d'un dispositif d'aération (16), est disposé et que l'installation de traitement d'eaux usées comprend un dispositif de commande (46) à l'aide duquel le dispositif d'amenée d'oxygène (14, 16) peut être mis en route et arrêté de façon que la transformation d'urée en ammoniac puisse être effectuée aussi bien de manière aérobique que de façon anaérobique et que l'installation de traitement d'eaux usées alterne entre un régime de fonctionnement aérobique et un régime de fonctionnement anaérobique dans le premier contenant de traitement (2), au moins un deuxième contenant de traitement (4) étant disposé en aval du premier contenant de traitement (2), qui est pourvu d'un dispositif d'amenée d'oxygène (24, 26), notamment sous la forme d'un dispositif d'aération (24), lors du fonctionnement de l'installation de traitement d'eaux usées, dans le deuxième contenant de traitement (4) en amenant de l'air, de l'ammoniac et/ou de l'ammonium pouvant être transformé en nitrate, un premier capteur (42, 44) relié au dispositif de commande (46) étant présent qui est configuré pour capter une concentration d'ammonium ou d'ammoniac, le dispositif de commande (46) étant configuré de façon qu'il mette en route ou arrête le dispositif d'amenée d'oxygène (14, 16) dans le premier contenant de traitement (2), en fonction d'une concentration d'ammonium ou d'ammoniac captée par le premier capteur (42, 44), d'une façon telle que de l'oxygène soit amené au premier contenant de traitement (2) lorsque la concentration d'ammonium ou d'ammoniac dans les eaux usées traitées dépasse une valeur limite prédéterminée et que de l'oxygène ne soit pas amené au premier contenant de traitement (2) lorsqu'une concentration d'ammonium ou d'ammoniac dans les eaux usées traitées est inférieure à la valeur limite prédéterminée.

2. Installation de traitement d'eaux usées selon la revendication 1, **caractérisée en ce que** ledit au moins un premier capteur (42, 44) est disposé sur un côté de sortie de l'installation de traitement d'eaux usées.

3. Installation de traitement d'eaux usées selon l'une des revendications précédentes, **caractérisée en ce que**, dans le premier contenant de traitement (2), au moins un dispositif de circulation (18) est disposé qui est adapté pour pouvoir être mis en route et arrêté par le dispositif de commande (46), le dispositif de commande (46) étant configuré de préférence de façon telle que le dispositif de circulation (18) soit mis en marche lorsque le dispositif d'amenée d'oxygène (14, 16) est à l'arrêt.

4. Installation de traitement d'eaux usées selon l'une des revendications précédentes, **caractérisée en ce que** le deuxième contenant de traitement (4) est relié au premier contenant de traitement (2) par un conduit de recirculation (50) dans lequel est disposée une pompe (52) asservie par le dispositif de commande (46) et/ou une vanne asservie par le dispositif de commande (46).

5. Installation de traitement d'eaux usées selon la revendication 4, **caractérisée en ce que** le dispositif de commande (46) est formé de telle façon qu'il provoque, par un asservissement approprié de la vanne et/ou de la pompe (52), une recirculation du deuxième contenant de traitement (4) dans le premier contenant de traitement (2) quand le dispositif d'amenée d'oxygène (14, 16) dans le premier contenant de traitement (2) est arrêté et qu'une transformation de l'urée en ammoniac s'opère dans le premier contenant de traitement (2) selon des conditions anaérobiques.

6. Installation de traitement d'eaux usées selon l'une des revendications précédentes, **caractérisée en ce que**, en aval du deuxième contenant de traitement (4), au moins un troisième contenant de traitement (6) est disposé qui est pourvu d'un dispositif d'amenée de carbone (32) adapté pour pouvoir être commandé, de préférence, par le dispositif de commande (46), une transformation de nitrate en azote se produisant dans le troisième contenant de traitement (6), lorsque l'installation de traitement d'eaux usées est en marche.

7. Installation de traitement d'eaux usées selon l'une des revendications précédentes, **caractérisée en ce que**, du côté de sortie des contenants de traitement (2, 4, 6), est disposé un dispositif de séparation de boue (34) qui sépare la boue des eaux usées traitées.

8. Installation de traitement d'eaux usées selon la revendication 7, **caractérisée en ce que** le dispositif de séparation de boue (34) est relié au premier contenant de traitement (2) par un retour de boue (46).

9. Procédé de traitement d'eaux usées pour le traitement d'eaux usées contenant de l'urée, notamment pour l'application dans une installation de traitement d'eaux usées selon l'une des revendications 1 à 8, selon lequel, dans une première étape de traitement, de l'urée est transformée en ammoniac par une enzyme d'uréase dans un premier contenant de traitement (2), la première étape de traitement étant mise en oeuvre, sélectivement de manière aérobique ou anaérobique, une transformation d'ammonium et/ou d'ammoniac en nitrate se produisant, sous apport en oxygène, dans une deuxième étape de transformation dans un deuxième contenant de traitement (4) placé en aval du premier contenant de traitement (2), **caractérisé en ce que** la première étape de traitement est mise en oeuvre de manière aérobique quand une concentration en ammonium ou en ammoniac dans les eaux usées traitées dépasse une valeur limite prédéterminée, et de manière anaérobique quand une concentration en ammonium ou en ammoniac dans les eaux usées traitées est inférieure à la valeur limite prédéterminée.

10. Procédé de traitement d'eaux usées selon la revendication 9, **caractérisé en ce que**, lorsque la première étape de traitement est mise en oeuvre de manière aérobique, la deuxième étape de traitement est mise en oeuvre en partie conjointement avec la première étape de traitement dans le même contenant de traitement.

11. Procédé de traitement d'eaux usées selon la revendication 9 ou 10, **caractérisé par** une troisième étape de traitement dans laquelle, sous apport en carbone, une transformation de nitrate en azote s'effectue.

12. Procédé de traitement d'eaux usées selon la revendication 11, **caractérisé en ce que**, lorsque la première étape de traitement est mise en oeuvre de manière anaérobique, la troisième étape de traitement est mise en oeuvre au moins en partie conjointement avec la première étape de traitement dans le même contenant de traitement.
